# FASCICULE DE BREVET EUROPEEN

(11) **EP 1 209 010 B1**
(45) Date de publication et mention de la délivrance du brevet: **11.08.2004**
(21) Numéro de dépôt: 01403012.6
(22) Date de dépôt: 23.11.2001
(51) Int. Cl.: B60G 13/00, F16F 9/54

(54) **Dispositif de fixation d'un amortisseur de suspension d'un véhicule automobile**
Vorrichtung zur Befestigung eines Dämpfers einer Fahrzeugaufhängung
Fixing device of a wheel suspension damper of a motor vehicle

(30) Priorité: 24.11.2000 FR 0015212
(43) Date de publication de la demande: 29.05.2002
(73) Titulaire: Peugeot Citroen Automobiles SA, 92200 Neuilly sur Seine (FR)
(72) Inventeur: Mennesson, Dominique Marie Christophe, 94700 Maisons-Alfort (FR)
(74) Mandataire: Thinat, Michel

(56) Documents cités:
- FR-A- 2 630 507
- US-A- 4 555 096
- US-A- 4 747 587

## Description

La présente invention concerne un dispositif de fixation d'un amortisseur de suspension d'un véhicule automobile, tel que défini dans le preambule des revendications 1 et 7. Un dispositif selon le préambule de la revendication 1 est connu de US 4,555,096.

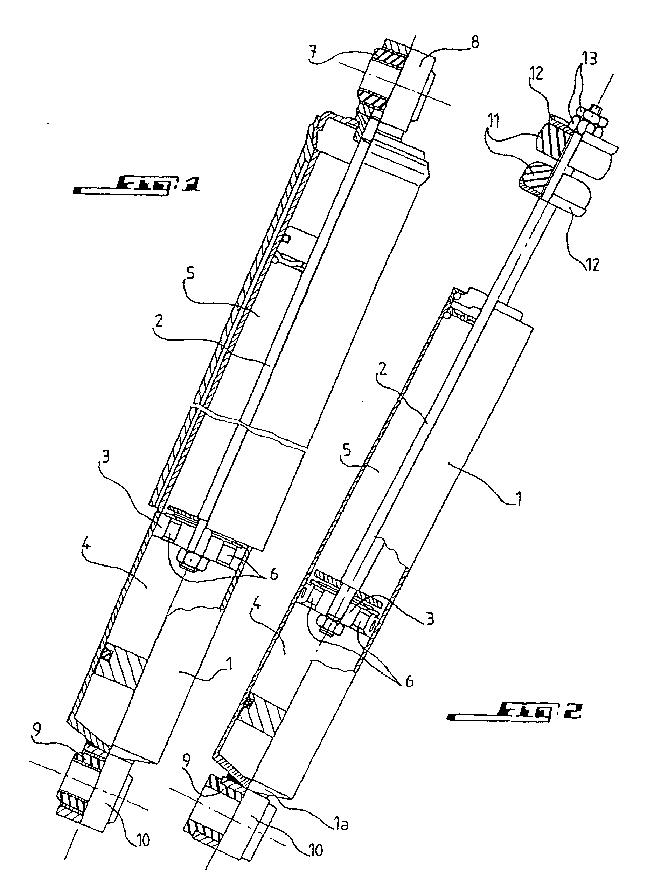

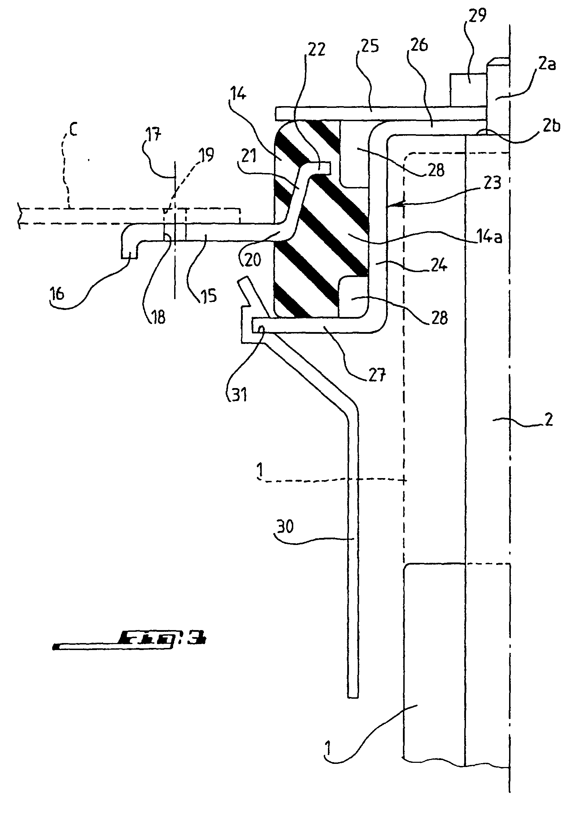

Les figures 1 et 2 représentent en perspective avec arrachement partiel deux types d'amortisseurs hydrauliques connus utilisés notamment dans des trains arrière de véhicules automobiles.

Chacun de ces deux amortisseurs comprend un cylindre 1 et une tige 2 montée à coulissement dans le cylindre 1 pour entraîner dans celui-ci un piston 3 délimitant deux chambres et qui refoule dans celles-ci de l'huile dans des ajutages calibrés 6 suivant le sens de déplacement de la tige pour freiner, plus ou moins énergiquement, les oscillations de la suspension.

Selon l'amortisseur de la figure 1, la tige 2 est reliée au châssis du véhicule par une articulation élastique 7 en forme de manchon cylindrique en élastomère fixé par adhérisation dans une douille ou oeil métallique 8 solidaire de l'extrémité de la tige par soudage ou par vissage, un axe non représenté traversant l'articulation élastique 7 pour solidariser l'extrémité de la tige 2 au châssis du véhicule. Le corps d'amortisseur 1 est relié au support de fusée de roue par une articulation élastique 9 également en forme de manchon en élastomère fixé par adhérisation dans une douille ou oeil métallique 10 solidaire de l'extrémité du cylindre d'amortisseur 1, un axe (non représenté) traversant le manchon 9 pour fixer l'articulation au support de fusée de roue.

Selon l'amortisseur de la figure 2, la tige d'amortisseur 2 est reliée à la caisse du véhicule par une articulation élastique comprenant deux blocs élastiques en élastomère 11 enserrant une partie rigide plane (non représentée) de la caisse ou qui est solidaire de celle-ci par soudage ou par vissage. Les deux blocs élastiques 11 sont comprimés de part et d'autre de la partie rigide plane entre deux coupelles supérieure et inférieure 12 rapprochées l'une de l'autre par un ensemble à écrou et contre-écrou 13 vissés à l'extrémité libre filetée de la tige d'amortisseur 2 qui traverse coaxialement les blocs 11 et les coupelles 12, la coupelle inférieure 12 étant en appui sur un épaulement de la tige 2. Ainsi, l'ensemble à écrou et contre-écrou 13 et les coupelles 12 assurent le maintien d'une précharge des blocs élastiques 11. Le corps d'amortisseur 1 est relié au support de fusée de roue comme celui de la figure 1. Selon une variante de réalisation non représentée, la fixation du corps d'amortisseur 1 au support de fusée de roue peut également être effectuée de façon identique à la tige 2, c'est-à-dire par un goujon solidaire, par soudage, du fond 1a du corps 1 coaxialement à ce dernier et comprimant deux blocs élastiques de part et d'autre d'une partie rigide plane solidaire de ce support par l'intermédiaire de deux coupelles opposées et d'un ensemble à écrou et contre-écrou vissé au goujon.

Quel que soit le type d'articulation utilisé pour fixer l'amortisseur, celle-ci se traduit inévitablement par un encombrement en longueur se cumulant à celui de l'amortisseur lui-même. Cet encombrement en longueur de l'amortisseur résulte non seulement de la course demandée à celui-ci, des efforts latéraux générés par les articulations et les ressorts de suspension, et des forces d'inertie, mais également et principalement de l'encombrement des articulations élastiques. Un tel encombrement est une caractéristique architecturale fondamentale qui régit directement la largeur du coffre arrière du véhicule, se traduisant par l'intrusion d'une grande partie de l'amortisseur dans les passages de roue.

La présente invention a pour but d'éliminer l'inconvénient ci-dessus des amortisseurs connus proposant un amortisseur dont l'encombrement en longueur est substantiellement réduit.

L'invention propose à cet effet un dispositif selon la revendication 1.

Le bloc annulaire pouvant être en appui sur la paroi latérale de la pièce en forme de cloche et comporte deux évidements annulaires supérieur et inférieur adjacents à cette paroi latérale pour diminuer la rigidité conique du bloc annulaire.

La pièce en forme de cloche et la plaque rigide circulaire pouvant être fixées ensemble l'une sur l'autre à l'extrémité de la tige d'amortisseur traversant deux perçages respectivement de la plaque circulaire et de la paroi transversale de la pièce en forme de cloche en appui sur un épaulement de la tige d'amortisseur.

La plaque rigide circulaire et la paroi transversale de la pièce en forme de cloche pouvant être fixées par un écrou de serrage vissé à l'extrémité filetée de la tige d'amortisseur.

Selon une variante de réalisation, la plaque rigide circulaire et la paroi transversale de la pièce en forme de cloche sont fixées par soudage de la plaque circulaire à l'extrémité de la tige d'amortisseur et qui est disposée au-dessus de cette paroi transversale.

Un manchon de protection entourant coaxialement le cylindre d'amortisseur est encastré à l'une de ses extrémités sur le pourtour du bord périphérique externe de la paroi en forme de collerette de la pièce en forme de cloche.

Dans le cas où la partie d'extrémité du cylindre amortisseur est reliée à la caisse du véhicule, l'invention propose un dispositif selon la revendication 7.

La plaque en forme de couronne pouvant être engagée en appui sur le bloc annulaire par un bord rabattu externe du manchon cylindrique en appui sur la plaque en forme de couronne.

Le bloc annulaire pouvant être en appui sur la paroi latérale du manchon cylindrique et comporte deux évidements annulaires supérieur et inférieur adjacents à cette paroi latérale pour diminuer la rigidité conique du bloc annulaire.

Le moyen de support du bloc annulaire pouvant comprendre une plaque annulaire fixée d'une part à la caisse du véhicule et d'autre part au bloc annulaire concentriquement à ce dernier par encastrement de son bord périphérique interne dans le bloc annulaire.

Le bloc annulaire pouvant être adhérisé au bord périphérique interne de la plaque annulaire de fixation de ce bloc.

Avantageusement, le bord périphérique interne de la plaque annulaire est prolongé par une partie tronconique à rebord radialement interne noyée dans le bloc annulaire et dirigée vers l'extrémité de la tige d'amortisseur ou vers la paroi de fond du corps d'amortisseur.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :
- les figures 1 et 2 sont des vues en perspective éclatées de deux types d'amortisseurs connus ;
- la figure 3 est une demi-vue partielle en coupe agrandie d'un amortisseur dont la tige est reliée à la caisse du véhicule par une articulation conforme à l'invention ; et
- la figure 4 est une demi-vue partielle agrandie d'un amortisseur dont le cylindre est relié à un support de fusée de roue par une articulation conforme à l'invention.

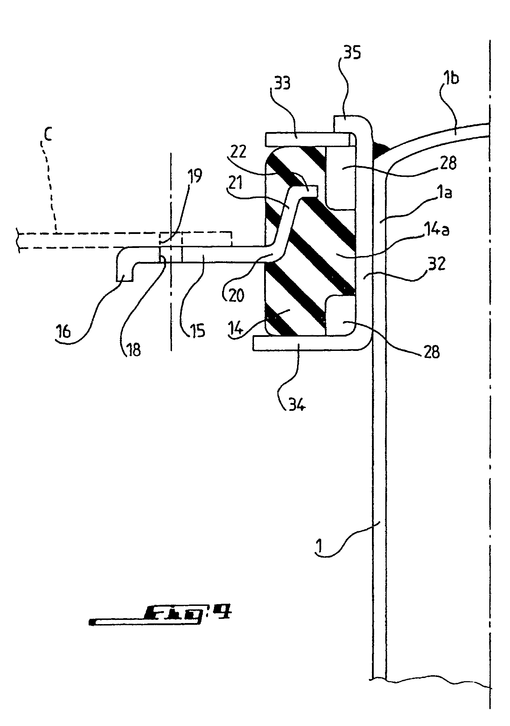

Selon le premier mode de réalisation de l'invention représenté en figure 3, l'amortisseur d'une suspension d'un véhicule automobile comprend un cylindre 1 dont l'extrémité inférieure (non représentée) est fixée, par une articulation élastique, à un support de fusée de roue arrière et une tige 2 montée à coulissement dans le cylindre 1 et dont l'extrémité supérieure est reliée à la caisse C du véhicule par l'intermédiaire d'une articulation élastique utilisant un élément filtrant 14 en matériau élastomère.

Selon l'invention, l'élément filtrant 14 est formé par un bloc annulaire disposé de façon à entourer concentriquement la partie d'extrémité de la tige 2 devant être reliée à la caisse.

Pour cela, le bloc annulaire 14 est fixé à la caisse C par un moyen de support rigide comprenant une plaque annulaire en forme de coupelle 15 dont le rebord 16 augmente la rigidité en flexion de la plaque 15 qui est fixée à la caisse C par des moyens de fixation symbolisés par l'axe 17 traversant des perçages correspondants 18, 19 de la plaque 15 et de la caisse C et qui assurent une liaison permanente, telle que par exemple des rivets, ou démontable, telle que des vis de fixation.

La plaque de fixation 15 est solidaire du bloc 14 concentriquement et transversalement à celui-ci par son bord périphérique interne 20 s'encastrant dans le bloc 14 en y étant solidaire par adhérisation. Le bord périphérique 20 de la plaque de fixation 15 est prolongé par une partie rigide tronconique 21 dirigée vers l'extrémité de la tige d'amortisseur 2 et comportant un rebord annulaire radialement interne 22. La partie tronconique 21 et le rebord 22 sont noyés dans le bloc annulaire 14 qui est adhérisé à ceux-ci.

Le bloc annulaire 14 est en outre relié à la partie d'extrémité de la tige 2 par des moyens d'emprisonnement qui comprennent une pièce en forme de cloche 23 solidaire de la tige d'amortisseur 2 de façon que sa paroi latérale cylindrique 24 entoure concentriquement cette tige, et une plaque rigide transversale circulaire 25 solidaire de l'extrémité de la tige 2 au-dessus de la paroi transversale 26 de la pièce en forme de cloche 23 en débordant de la paroi latérale 24 de cette dernière de façon à délimiter avec la paroi opposée 27 en forme de collerette de la pièce en forme de cloche 23 un logement de réception du bloc annulaire 14. La plaque transversale 25 et la paroi en forme de collerette 27 sont espacées l'une au-dessus de l'autre d'une distance inférieure à l'épaisseur en direction axiale, parallèle à la tige 2, du bloc annulaire 14 de façon à exercer un effort de compression axiale sur le bloc annulaire 14 et le maintenir dans le logement défini par la plaque 25, la paroi transversale et la paroi latérale 24 de la pièce en forme de cloche 23, le bloc 14 étant en outre en appui sur la paroi latérale 24 de la pièce 23.

Le bloc 14 comprend deux évidements annulaires supérieur et inférieur 28 adjacents à la paroi latérale 24 de la pièce 23 en étant situés de part et d'autre de la partie annulaire centrale 14a du bloc 14 contactant la paroi latérale 24.

Comme représenté, la plaque transversale 25 et la paroi transversale 26 de la pièce 23 sont fixées l'une sur l'autre à l'extrémité de la tige 2 par un écrou de blocage 29 vissé à l'extrémité libre filetée 2a de la tige 2, la paroi transversale 26 de la pièce 23 étant maintenue en appui sur un épaulement 2b de la tige 2.

Selon une variante de réalisation, la plaque 25 et la paroi transversale 26 de la pièce 3 peuvent être fixées l'une sur l'autre à la tige 2 par soudage de la plaque 25 à l'extrémité libre 2a de la tige 2.

La figure 3 montre la présence d'un manchon de protection 30 de l'amortisseur entourant concentriquement celui-ci et dont la partie d'extrémité supérieure est encastrée sur le pourtour du bord périphérique externe de la paroi en forme de collerette 27 de la pièce en cloche 23. Ainsi, la partie supérieure du manchon de protection 30 comporte une gorge radialement interne 31 dans laquelle s'engage à force le bord périphérique externe de la paroi transversale 27 de la pièce en forme de cloche 23. Ainsi, lors des débattements relatifs de la tige 2 et du cylindre 1 de l'amortisseur, la position du manchon de protection 30 relativement au corps d'amortisseur 1 n'est pas affectée.

En disposant l'articulation élastique à bloc filtrant 14 latéralement à l'amortisseur et autour de celui-ci, on réduit considérablement l'encombrement longitudinal total de l'amortisseur comme cela ressort de la figure 3 qui montre, en pointillés, la pénétration du cylindre d'amortisseur 1 dans la partie en forme de cloche 23 et, par conséquent, le gain en encombrement longitudinal qui en résulte.

La figure 4 représente une variante de réalisation de l'articulation de l'invention utilisée pour relier la partie d'extrémité du cylindre d'amortisseur 1 à la carrosserie C du véhicule au lieu de fixer l'amortisseur à la caisse par la tige d'amortisseur comme décrit en figure 3.

Les éléments identiques et accomplissant les mêmes fonctions que ceux décrits à la figure 3 portent en figure 4 les mêmes références.

En se reportant à la figure 4, le logement de réception du bloc annulaire 14 permettant de l'emprisonner comprend un manchon cylindrique 32 fixé par soudage sur le pourtour de la partie d'extrémité 1a du cylindre d'amortisseur 1 et délimitée par sa paroi de fond 1b opposée à l'extrémité de la tige d'amortisseur (non représentée) fixée dans le cas présent à un support de fusée de roue.

Les moyens délimitant le logement du bloc annulaire 14 comprennent en outre une plaque transversale en forme de couronne 33 entourant concentriquement le manchon 32 au voisinage de sa partie d'extrémité située au niveau de la paroi de fond 1b du cylindre 1 et disposée parallèlement à une paroi transversale en forme de collerette de l'extrémité du manchon 32 opposée à la paroi de cylindre 1b.

Ainsi, le bloc annulaire 14 est emprisonné dans le logement défini par le manchon 32, la paroi en forme de collerette 34 de celui-ci et la plaque transversale 33 avec la distance séparant cette dernière de la paroi 34 inférieure à l'épaisseur axiale du bloc annulaire 14 pour le comprimer axialement.

La plaque en couronne 33 est maintenue en appui forcé sur le bloc annulaire 14 par un bord rabattu externe 35 du manchon 32 en appui sur la partie centrale de la plaque 33.

Le bloc annulaire 14 comprend les deux évidements annulaires supérieur et inférieur 28 situés de part et d'autre de la partie annulaire centrale 14a de ce bloc en appui sur la face correspondante du manchon 32.

Il est inutile de décrire à nouveau les autres éléments apparaissant en figure 4 puisque identiques à ceux déjà décrits en référence à la figure 3.

Le dispositif de fixation d'un amortisseur conforme à l'invention permet de réduire substantiellement l'encombrement axial de l'amortisseur, ce qui permet de supprimer l'intrusion de l'amortisseur dans le passage de roue correspondant et d'abaisser le plancher tout en permettant, le cas échéant, l'utilisation de dispositif d'amortissement pilotés encombrants. En outre, le fait qu'il ne soit pas nécessaire de prévoir un bloc filtrant et son support de fixation ayant une symétrie de révolution, permet de différencier les caractéristiques de raideur de ce bloc filtrant selon les différentes directions pour une meilleure performance de l'isolation des vibrations. L'augmentation des surfaces en contact avec le bloc filtrant permet d'utiliser des matériaux plus souples tels que par exemple de la mousse de polyuréthane ayant un fort potentiel de performance en acoustique.

## Revendications

1. Dispositif de fixation d'un amortisseur de suspension d'un véhicule automobile, selon lequel l'extrémité de la tige (2) de l'amortisseur est reliée à la caisse (C) du véhicule par l'intermédiaire d'une articulation élastique utilisant un élément filtrant (14) en matériau élastomère, l'élément filtrant (14) comprenant un bloc annulaire entourant concentriquement la partie d'extrémité de la tige (2) en étant d'une part fixé à la caisse par un moyen de support rigide (15) et d'autre part relié à cette partie d'extrémité par des moyens (24,25,27) emprisonnant le bloc annulaire (14) en le comprimant axialement, **caractérisé en ce que** les moyens d'emprisonnement du bloc annulaire comprennent une pièce en forme de cloche (23) solidaire de la tige (2) de façon que la paroi latérale (24) de la pièce en forme de cloche (23) entoure concentriquement la tige (2) pour permettre la pénétration du cylindre (1) dans la paroi latérale (24) lors des débattements de l'amortisseur, et une plaque rigide circulaire (25) solidaire de la paroi transversale (26) de la pièce en forme de cloche (23) et débordant de la paroi latérale (24) de cette dernière pour délimiter avec la paroi opposée (27) en forme de collerette de la pièce en forme de cloche (23) un logement de réception du bloc annulaire (14), la paroi rigide circulaire (25) et la paroi en forme de collerette (27) de la pièce en forme de cloche (23) étant espacées l'une de l'autre d'une distance inférieure à l'épaisseur axiale du bloc annulaire (14).

2. Dispositif selon la revendication 1, **caractérisé en ce que** le bloc annulaire (14) est en appui sur la paroi latérale (24) de la pièce en forme de cloche (23) et comporte deux évidements annulaires supérieure et inférieure (28) adjacents à cette paroi latérale pour diminuer la rigidité conique du bloc annulaire (14).

3. Dispositif selon la revendication 1 ou 2, **caractérisé en ce que** la pièce en forme de cloche (23) et la plaque rigide circulaire (25) sont fixées ensemble l'une sur l'autre à l'extrémité de la tige d'amortisseur (2) traversant deux perçages respectivement de la plaque circulaire et de la paroi transversale (26) de la pièce en forme de cloche en appui sur un épaulement (2b) de la tige d'amortisseur (2).

4. Dispositif selon la revendication 3, **caractérisé en ce que** la plaque circulaire (25) et la paroi transversale de la pièce en forme de cloche sont fixées par un écrou de serrage vissé à l'extrémité filetée de la tige d'amortisseur.

5. Dispositif selon la revendication 3, **caractérisé en ce que** la plaque circulaire et la paroi transversale (26) de la pièce en forme de cloche (23) sont fixées par soudage de la plaque circulaire (25) à l'extrémité 2a de la tige d'amortisseur (2) et qui est disposée au-dessus de cette paroi transversale.

6. Dispositif selon l'une des revendications précédentes, **caractérisé en ce qu'**un manchon de protection (30) entourant coaxialement le cylindre d'amortisseur (1) est encastré à l'une de ses extrémités sur le pourtour du bord périphérique externe de la paroi en forme de collerette (27) de la pièce en forme de cloche (23).

7. Dispositif de fixation d'un amortisseur de suspension d'un véhicule automobile, selon lequel l'extrémité du cylindre (1) de l'amortisseur est reliée à la caisse (C) du véhicule par l'intermédiaire d'une articulation élastique utilisant un élément filtrant (14) en matériau élastomère, l'élément filtrant (14) comprenant un bloc annulaire entourant concentriquement la partie d'extrémité du cylindre (1) en étant d'une part fixé à la caisse par un moyen de support rigide (15) et d'autre part relié à cette partie d'extrémité par des moyens (32,33,34) emprisonnant le bloc annulaire (14) en le comprimant axialement, **caractérisé en ce que** les moyens d'emprisonnement du bloc annulaire (14) comprennent un manchon cylindrique (32) fixé par soudage sur le pourtour de la partie d'extrémité du cylindre d'amortisseur (1) et dont une extrémité comporte une paroi en forme de collerette (34), et une plaque transversale en forme de couronne (33) entourant concentriquement le manchon cylindrique (32) au voisinage de son extrémité opposée en étant en appui sur le bloc annulaire (14) de façon à le précontraindre axialement dans le logement défini par la paroi latérale du manchon (32), la paroi en forme de collerette (34) et la plaque transversale en forme de couronne (33).

8. Dispositif selon la revendication 7, **caractérisé en ce que** la plaque en forme de couronne (33) est engagée en appui sur le bloc annulaire (14) par un bord rabattu externe (35) du manchon cylindrique (32) en appui sur la plaque en forme de couronne (33).

9. Dispositif selon la revendication 7 ou 8, **caractérisé en ce que** le bloc annulaire (14) est en appui sur la paroi latérale du manchon cylindrique (32) et comporte deux évidements annulaires supérieur et inférieur (28) adjacents à cette paroi latérale pour diminuer la rigidité conique du bloc annulaire.

10. Dispositif selon l'une des revendications précédentes, **caractérisé en ce que** le moyen de support du bloc annulaire comprend une plaque annulaire (15) fixée d'une part à la caisse du véhicule et d'autre part au bloc annulaire (14) concentriquement à ce dernier par encastrement de son bord périphérique interne dans le bloc annulaire.

11. Dispositif selon la revendication 10, **caractérisé en ce que** le bloc annulaire (14) est adhérisé au bord périphérique interne (20) de la plaque annulaire (15) de fixation du bloc annulaire.

12. Dispositif selon la revendication 10 ou 11, **caractérisé en ce que** le bord périphérique interne (20) de la plaque annulaire (15) est prolongé par une partie tronconique (21) à rebord radialement interne (22) noyée dans le bloc annulaire (14) et dirigée vers l'extrémité de la tige d'amortisseur (2) ou vers la paroi de fond (1a) du corps d'amortisseur (1).

## Patentansprüche

1. Vorrichtung zur Befestigung eines Dämpfers bei der Aufhängung eines Fahrzeugs, bei welcher das Ende der Stange (2) des Dämpfers mit dem Wagenkasten (C) des Fahrzeugs mittels einer elastischen Anlenkung verbunden ist, bei welcher ein Filterelement (14) aus Elastomermaterial zum Einsatz kommt, welches einen ringförmigen Block aufweist, welcher den Endabschnitt der Stange (2) konzentrisch umschließt und dabei zum einen an dem Wagenkasten über eine starre Abstützeinrichtung (15) befestigt ist und zum anderen mit diesem Endabschnitt mit Hilfe von Mitteln (24, 25, 27) verbunden ist, welche den ringförmigen Block (14) einschließen und ihn dabei in axialer Richtung zusammendrückt, **dadurch gekennzeichnet, dass** die Mittel zum Einschließen des ringförmigen Blocks ein glockenförmiges Teil (23) umfassen, welches fest mit der Stange (2) in der Weise verbunden ist, dass die Seitenwandung (24) des glockenförmigen Teils (23) die Stange (2) konzentrisch umschließt, um das Eindringen des Zylinders (1) in die Seitenwandung (24) während der Auslenkungen des Dämpfers zu ermöglichen, und eine kreisförmige starre Platte (25) aufweisen, die fest mit der Querwandung (26) des glockenförmigen Teils (23) verbunden ist und über die Seitenwandung (24) des letzteren so übersteht, dass mit der gegenüberliegenden Wandung (27) in Form eines Bundes am glockenförmigen Teil (23) ein Aufnahmelager für den ringförmigen Block (14) gebildet wird, wobei die kreisförmige starre Wandung (25) und die Wandung in Form eines Bundes (27) am glockenförmigen Teil (23) von einander um eine Distanz beabstandet sind, die kleiner als die Dicke des ringförmigen Blocks (14) in axialer Richtung ist.

2. Vorrichtung nach Anspruch 1, **dadurch gekennzeichnet, dass** sich der ringförmige Block (14) auf der Seitenwandung (24) des glockenförmigen Teils (23) a abstützt und zwei ringförmige Vertiefungen (28) aufweist, und zwar eine obere und eine untere, welche dieser Seitenwandung benachbart sind, um die konische Steifigkeit des ringförmigen Blocks (14) zu verringern.

3. Vorrichtung nach Anspruch 1 oder 2, **dadurch gekennzeichnet, dass** das glockenförmige Teil (23) und die kreisförmige starre Platte (25) am Ende der Dämpferstange (2) an einander befestigt sind, welche durch zwei jeweilige Bohrungen in der kreisförmigen Platte und in der Querwandung (26) des glockenförmigen Teils geführt ist, das sich auf einer Schulter (2b) der Dämpferstange (2) abstützt.

4. Vorrichtung nach Anspruch 3, **dadurch gekennzeichnet, dass** die kreisförmige Platte (25) und die Querwandung des glockenförmigen Teils mittels einer Spannschraube befestigt sind, die am Ende mit Gewinde der Dämpferstange aufgeschraubt ist.

5. Vorrichtung nach Anspruch 3, **dadurch gekennzeichnet, dass** die kreisförmige Platte und die Querwandung (26) des glockenförmigen Teils (23) durch Anschweißen der kreisförmigen Platte (25) am Ende (2a) der Dämpferstange (2) befestigt sind, das über dieser Querwandung angeordnet ist.

6. Vorrichtung nach einem der vorhergehenden Ansprüche, **dadurch gekennzeichnet, dass** eine Schutzmanschette (30), welche den Dämpferzylinder (1) koaxial umgibt, in eines seiner Enden auf dem Umfang des äußeren peripheren Randes der Wandung in Form eines Bundes am glockenförmigen Teil (23) eingelassen ist.

7. Vorrichtung zur Befestigung eines Dämpfers bei der Aufhängung eines Fahrzeugs, bei welcher das Ende des Zylinders (1) des Dämpfers mit dem Wagenkasten (C) des Fahrzeugs mittels einer elastischen Anlenkung verbunden ist, bei welcher ein Filterelement (14) aus Elastomermaterial zum Einsatz kommt, wobei das Filterelement (14) einen ringförmigen Block aufweist, welcher den Endabschnitt des Zylinders konzentrisch umgibt und dabei zum einen mittels einer starren Abstützeinrichtung (15) an dem Wagenkasten befestigt ist und zum anderen mit diesem Endabschnitt mittels Einrichtungen (32, 33, 34) verbunden ist, welcher den ringförmigen Block (14) umschließt und dabei in axialer Richtung zusammendrückt, **dadurch gekennzeichnet, dass** die Einrichtungen zum Umschließen des ringförmigen Blocks (14) eine zylinderförmige Manschette (32) aufweisen, die durch Schweißen auf dem Umfang des Endabschnitts des Dämpferzylinders (1) befestigt ist und deren eines Ende eine Wandung in Form eines Bundes (34) aufweist, sowie eine Querplatte in Form eines Kranzes (33), welche die zylinderförmige Manschette (32) in der Nähe ihres Endes umgibt, das gegenüber liegt und sich dabei auf dem ringförmigen Block (14) in der Weise abstützt, dass sie ihn in axialer Richtung in das Lager vorspannt, das von der Seitenwandung der Manschette (32), der Wandung in Form eines Bundes (34) und der Querplatte in Form eines Kranzes definiert wird.

8. Vorrichtung nach Anspruch 7, **dadurch gekennzeichnet, dass** die Platte in Form eines Kranzes (33) in Anlage über einem außen liegenden umgeschlagenen Rand (35) an der zylinderförmigen Manschette (32), die sich auf der kranzförmigen Platte (33) abstützt, auf dem ringförmigen Block (14) eingesetzt ist.

9. Vorrichtung nach Anspruch 7 oder 8, **dadurch gekennzeichnet, dass** der ringförmige Block (14) sich auf der Seitenwandung der zylinderförmigen Manschette (32) abstützt und zwei ringförmige Vertiefungen (28) aufweist, nämlich eine obere und eine untere Vertiefung, welche dieser seitlichen Wandung benachbart sind, um die konische Steifigkeit des ringförmigen Blocks zu verringern.

10. Vorrichtung nach einem der vorhergehenden Ansprüche, **dadurch gekennzeichnet, dass** die Abstützeinrichtung für den ringförmigen Block eine ringförmige Platte (15) aufweist, die einerseits am Wagenkasten des Fahrzeugs und andererseits an dem ringförmigen Block (14) konzentrisch zu diesem durch Einfalzung ihres innen liegenden peripheren Randes in dem ringförmigen Block befestigt ist.

11. Vorrichtung nach Anspruch 10, **dadurch gekennzeichnet, dass** der ringförmige Block (14) an dem innen liegenden peripheren Rand (20) der ringförmigen Platte (15) zur Befestigung des ringförmigen Blocks in feste Anhaftung gebracht ist.

12. Vorrichtung nach Anspruch 10 oder 11, **dadurch gekennzeichnet, dass** der innen liegende umlaufende Rand (20) der ringförmigen Platte (15) von einem kegelstumpfförmigen Abschnitt (21) verlängert wird, dessen radial innen liegender Umschlag (22) in den ringförmigen Block (14) eingebettet und zum Ende der Dämpferstange (2) oder zur Bodenwandung (1a) des Korpus des Dämpfers (1) gerichtet ist.

## Claims

1. Device for fastening a motor vehicle suspension damper, in which the end of the rod (2) of the damper is connected to the body (C) of the vehicle by way of an elastic joint using a filtering element (14) made of elastomeric material, the filtering element (14) comprising an annular block concentrically surrounding the end part of the rod (2) and being, on the one hand, fastened to the body by a rigid support means (15) and, on the other hand, connected to this end part by means (24, 25, 27) that enclose the annular block (14) while compressing it axially, **characterized in that** the means for enclosing the annular block comprise a bell-shaped component (23) secured to the rod (2) so that the lateral wall (24) of the bell-shaped component (23) concentrically surrounds the rod (2) in order to allow the cylinder (1) to penetrate within the lateral wall (24) during displacements of the damper, and a circular rigid plate (25) secured to the transverse wall (26) of the bell-shaped component (23) and protruding beyond the lateral wall (24) of the latter in order to delimit with the flange-shaped opposite wall (27) of the bell-shaped component (23) a housing for accommodating the annular block (14), the circular rigid wall (25) and the flange-shaped wall (27) of the bell-shaped component (23) being spaced apart by a distance that is less than the axial thickness of the annular block (14).

2. Device according to Claim 1, **characterized in that** the annular block (14) bears on the lateral wall (24) of the bell-shaped component (23) and comprises two annular cutouts (28), one upper and one lower, that are adjacent to this lateral wall in order to reduce the conical rigidity of the annular block (14).

3. Device according to Claim 1 or 2, **characterized in that** the bell-shaped component (23) and the circular rigid plate (25) are fastened together one on top of the other at the end of the damper rod (2) passing through two respective bores in the circular plate and in the transverse wall (26) of the bell-shaped component bearing on a shoulder (2b) of the damper rod (2).

4. Device according to Claim 3, **characterized in that** the circular plate (25) and the transverse wall of the bell-shaped component are fastened by a clamping nut screwed onto the threaded end of the damper rod.

5. Device according to Claim 3, **characterized in that** the circular plate and the transverse wall (26) of the bell-shaped component (23) are fastened by welding the circular plate (25) at the end 2a of the damper rod (2), the circular plate being arranged above this transverse wall.

6. Device according to one of the preceding claims, **characterized in that** a protective sleeve (30) coaxially surrounding the damper cylinder (1) is fitted at one of its ends around the external peripheral edge of the flange-shaped wall (27) of the bell-shaped component (23).

7. Device for fastening a motor vehicle suspension damper, in which the end of the cylinder (1) of the damper is connected to the body (C) of the vehicle by way of an elastic joint using a filtering element (14) made of elastomeric material, the filtering element (14) comprising an annular block concentrically surrounding the end part of the cylinder (1) and being, on the one hand, fastened to the body by a rigid support means (15) and, on the other hand, connected to this end part by means (32, 33, 34) that enclose the annular block (14) while compressing it axially, **characterized in that** the means for enclosing the annular block (14) comprise a cylindrical sleeve (32) fastened by welding around the end part of the damper cylinder (1) and of which one end comprises a flange-shaped wall (34), and a transverse ring-shaped plate (33) concentrically surrounding the cylindrical sleeve (32) in the vicinity of its opposite end and bearing on the annular block (14) so as to prestress it axially in the housing defined by the lateral wall of the sleeve (32), the flange-shaped wall (34) and the transverse ring-shaped plate (33).

8. Device according to Claim 7, **characterized in that** the ring-shaped plate (33) is in bearing engagement with the annular block (14) by an external folded edge (35) of the cylindrical sleeve (32) bearing on the ring-shaped plate (33).

9. Device according to Claim 7 or 8, **characterized in that** the annular block (14) bears on the lateral wall of the cylindrical sleeve (32) and comprises two annular cutouts (28), one upper and one lower, that are adjacent to this lateral wall in order to reduce the conical rigidity of the annular block.

10. Device according to one of the preceding claims, **characterized in that** the means for supporting the annular block comprises an annular plate (15) fastened, on the one hand, to the body of the vehicle and, on the other hand, to the annular block (14) concentrically to the latter by implanting its internal peripheral edge in the annular block.

11. Device according to Claim 10, **characterized in that** the annular block (14) is adhesively bonded to the internal peripheral edge (20) of the annular plate (15) for fastening the annular block.

12. Device according to Claim 10 or 11, **characterized in that** the internal peripheral edge (20) of the annular plate (15) is extended by a frustoconical part (21) with a radially internal rim (22), this frustoconical part being embedded in the annular block (14) and directed towards the end of the damper rod (2) or towards the end part (1a) of the damper body (1).
